Europäisches Patentamt

European Patent Office

Office européen des brevets

(11) Publication number: **0 314 495**
**A2**

# EUROPEAN PATENT APPLICATION

(21) Application number: **88310153.7**

(22) Date of filing: **28.10.88**

(51) Int. Cl.⁴: **C 09 J 3/14**
**C 08 L 23/20**

(30) Priority: **30.10.87 US 115678    30.10.87 US 115682**

(43) Date of publication of application:
**03.05.89  Bulletin  89/18**

(84) Designated Contracting States:
**AT BE CH DE ES FR GB GR IT LI LU NL SE**

(71) Applicant: **SHELL OIL COMPANY**
**900, Louisiana**
**Houston Texas 77001  (US)**

**MITSUI PETROCHEMICAL INDUSTRIES, LTD.**
**2-5, Kasumigaseki 3-chome Chiyoda-ku**
**Tokyo 100  (JP)**

(72) Inventor: **Mostert, Simon**
**13023 King Circle**
**Cypress Texas 77429  (US)**

(74) Representative: **Myerscough, Philip Boyd et al**
**J.A.Kemp & Co. 14, South Square Gray's Inn**
**London, WC1R 5EU  (GB)**

(54) Hot melt adhesive containing butene-1 polymers.

(57) A hot melt adhesive comprising a blend of:
   (i) from 10 to 90% by weight of an intimate mixture of (a) an at least partially crystalline copolymer of butene-1 and ethylene, wherein the ethylene content is from 1 to 20 mole percent, and (b) a butene-1 homopolymer, the weight ratio of (a):(b) in said intimate mixture being from 9:1 to 1:9;
   (ii) from 90 to 10% by weight of a tackifying resin, the weight percentages of (i) and (ii) being based on their combined weight; and
   (iii) up to 0.5 parts by weight per 100 parts by weight of (i) and (ii) (phr) of an antioxidant.

EP 0 314 495 A2

Bundesdruckerei Berlin

**Description**

# HOT MELT ADHESIVE CONTAINING BUTENE-1 POLYMERS

This invention relates to hot melt adhesives which exhibit good high temperature performance and adhesion and which contain a copolymer of butene-1 and ethylene.

Hot melt adhesives can be formulated to be pressure sensitive and have an infinite open time but such adhesives are usually soft, tacky and have limited strength and adhesion. Conventional hot melts, such as formulations of poly(ethylene/vinylacetate)(EVA), polyethylenes, polyamides or polyesters, are rigid, form good strong bonds to certain substrates but have short open times, usually less than 1 minute. Moreover, these adhesives usually do not adhere well to cold metal substrates.

Solvent applied contact adhesives can be formulated to give good bond strengths and reasonable open times but can have significant drawbacks since solvents can cause toxicity, pollution and fire hazards. The hot melt adhesives of the invention are unique in that they require no solvents, have good T-peel and good shear adhesion failure temperature (SAFT) properties, and show improved adhesion to cold metal substrates, such as aluminum substrates.

Butene-1 polymers are a unique group of olefinic polymers because they crystallize very slowly. The very slow crystallization rate, in contrast to the crystallization rates of other polyolefin crystalline polymers, such as EVAs, polyethylenes and polypropylenes, has been found to provide long open times as well as good adhesion and bonding to cold, heat-sink type substrates, for example metals such as stainless steel and anodized aluminum.

US-A-4,568,713 teaches hot melt adhesives containing either butene-1 copolymers or butene homopolymers and tackifying resins, but does not suggest the possibility of improving SAFT and T-peel values by incorporating certain carefully selected proportions of butene-1 homopolymer with butene-1/ethylene copolymer in adhesive blends containing a tackifying resin.

According to the invention there is provided a hot melt adhesive comprising a blend of:

(i) from 10 to 90% by weight, preferably 45 to 55% by weight, of an intimate mixture of (a) an at least partially crystalline copolymer of butene-1 and ethylene, wherein the ethylene content is from 1 to 20 mole percent, and (b) a butene-1 homopolymer, the weight ratio of (a):(b) in said intimate mixture being from 9:1 to 1:9;

(ii) from 90 to 10% by weight, preferably 55 to 45% by weight, of a tackifying resin, the weight percentages of (i) and (ii) being based on their combined weight; and

(iii) up to 0.5 parts by weight per 100 parts by weight of (i) and (ii) (phr) of an antioxidant.

Butene-1 homopolymer for use in the adhesives of the present invention is composed of linear chain molecules with a regular and spatially ordered arrangement of ethyl side groups, the pendant groups that result when butene-1 is polymerized across the 1, 2 carbon double bond (along an ethylene chain backbone) (see US-A-3,362,940). When cooled from melt, the ethyl side groups initially align in a tetragonal spatial arrangement, developing a little over one half of the ultimate crystallinity (form II). With time, the tetragonal crystalline phase transforms into a stable hexagonal spatial arrangement with subsequent development of additional crystallinity (form I). This is a very slow process, the transformation being completed in the neat polymer over a period of several days.

Butene-1 can be copolymerized with a variety of alpha-olefins to provide useful copolymers as described in US-A-3,362,940. Butene-1/ethylene copolymers, with ethylene monomer in the 5.5-20 mole percent range, are described in US-A-4,568,713, and US-A-3,362,940 and it has now been discovered that copolymers of this type with low ethylene comonomer contents (at least 1 mole %, say 1-6w%) are of special interest in hot melt adhesives. The slight amount of ethylene comonomer may produce a lower glass transition temperature (Tg) and increase the amount of amorphous phase in the polymer. The slight amount of ethylene may further reduce the crystallization rate. These polymers provide many advantages in the development of hot melt adhesives, such as a lower Tg and a higher amorphous phase. These polymers offer wider formulating latitude in combination with compatible resins, waxes, oils, fillers and other additives.

The adhesives of the invention can be prepared using from 10% to 90% by weight of an intimate mixture of butene-1 polymers (homo- and copolymer) with differing melt flows, say up to 1000 Ml, preferably 20 to 1000, and viscosities. These intimate mixtures can be produced by mixing from zero to 2500 ppm, preferably up to 1000 ppm, of a peroxide, such as Lupersol 101 peroxide available from Pennwalt, with butene-1 polymer pellets and extruding the mixture through a Brabender extruder, for example at 200°C with an average residence time of 2 minutes. The adhesives can more preferably be prepared using 45-55% by weight of the intimate mixture of butene-1 polymers.

To formulate the adhesives the intimate mixture of butene-1 polymers is added to a substantially non-polar aliphatic tackifier resin. 10-90% by weight of the tackifying resin can be used to prepare the adhesive depending on the amount of the intimate mixture of butene-1 polymers used. A preferred amount is 20% by weight to 60% by weight, more preferably 30% to 50% by weight. It is most preferred to use 45-55% by weight of the tackifying resin. The substantially non-polar aliphatic tackifier resin can be a $C_5$-$C_9$ stream resin, polyterpene resin or hydrogenated resin with a softening point of 70 to 130°C. For the most part, partially hydrogenated $C_9$ based hydrocarbon resins, as well as $C_5$ stream resins, and polyterpenes can be used. Resins with 85°C softening points can be used (Arkon P-85 and Escorez 5380) as can those with 120°C softening points (Arkon P-120). The two 85°C melting point resins show crystalline melting points (Tm) and glass transition temperatures (Tgs) above room temperature; Tm = 85°C, Tg = 35°C for the Arkon P-85 and Tm = 80°C, Tg = 29°C for the Escorez 5380 resin. Both resins formed clear melts and clear solids upon cooling in the intimate mixture of butene-1 polymers. The Arkon P-120 showed a crystalline melting point of 125°C and Tg of 67°C. The resin formed a clear melt and a clear solid upon cooling in the intimate mixture of butene-1 polymers.

The hot melt adhesives of the invention may optionally contain additional ingredients, including microcrystalline wax and/or atactic polypropylene. A microcrystalline wax, such as Shellwax® 500, may be added in amount up to 30 phr and preferably 5-15 phr, based on the weight of the entire adhesive composition. When a wax is used the amount should be sufficient to reduce the viscosity of the adhesive without causing a substantial decrease in its service temperature. Atactic polypropylene can be advantageously added to the adhesive, up to 30phr and preferably 5-20 phr.

Small amounts of nucleating agent may be added advantageously to the adhesive, in amounts up to 50 phr, and preferably from 5 to 25 phr, based on the entire adhesive formulation. Stearamide, substituted stearamides such as N,N,ethylene-di-stearamide, para-amino benzoic acid, and polymers such as high density polyethylene and polypropylene can be used as nucleating agent.

Antioxidants can be added to the adhesive formulation, in amounts from 0.1 phr to 0.5 phr based on the entire formulation.

Hindered phenolic antioxidants have been used in the adhesive blend with good results. Tetrakis methylene (3,5-di-tert-butyl-4-hydroxyhydrocinnamate) methane (Irganox® 1010 from Ciba-Geigy) can be added to the blend at a level of, for example, 0.3 phr. Other antioxidants which may be used in similar amounts are Goodrite® 3114, Ethanox® 330 and Irganox® 1076.

The invention provides adhesive formulations which exhibit unexpected SAFT and T-peel results when compared with adhesives comprising only butene-1 homopolymer and tackifying resin or only butene-1 ethylene copolymer and tackifying resin. More specifically, it has been surprisingly found that for the adhesive, the shear adhesion failure temperature (SAFT) may be controlled to remain high while obtaining high T-peel values when the adhesive is applied to a variety of substrates.

The adhesive blends of the present invention can be used, for example, in the assembly of products such as disposable products or small hand-held appliances, in carpet manufacture, or as automotive adhesives and sealants. Preferably, the adhesive blends of the invention are used to provide laminar structures comprising a substrate, for example of isotactic polypropylene, isotactic polybutylene, polyethylene, steel, paper, aluminum, anodized aluminum or a crystalline polymer, and a layer of the adhesive blend.

Exemplary butene-1 polymers for use in the adhesives of the invention are identified as H-1-B (butene-1-homopolymer) and 1B-CoE 6 (copolymer of butene-1 with 6 mole percent ethylene).

These butene-1 polymers have been used either singly (controls) or as intimate mixtures (invention) in various weight ratios (25:75; 50:50 and 75:25) in hot melt adhesives comprising a blend of 50 parts by weight of the butene-1 polymer(s) (homopolymer H-1-B and/or butene-1/ethylene copolymer 1B-CoE6) and 50 parts by weight of tackifying resin (Arkon P85). When tested on a polybutene substrate the results obtained are as summarised in Table 1. As can be seen from the data in Table 1, the adhesive blends containing the intimate mixture of butene-1 homopolymer and butene-1/ethylene copolymer combined good SAFT and lap shear properties. A blend containing no homopolymer had high lap shear but low SAFT, while a blend containing no butene-1/ethylene copolymer had an unacceptably low lap shear.

Table 2 shows the SAFT and T-peel results obtained when testing similar adhesive blends containing 50 parts by weight of the butene-1 polymer(s) and 50 parts by weight of a different tackifying resin (Escorez 5380) on aluminum (Al) or polypropylene(PP) substrates.

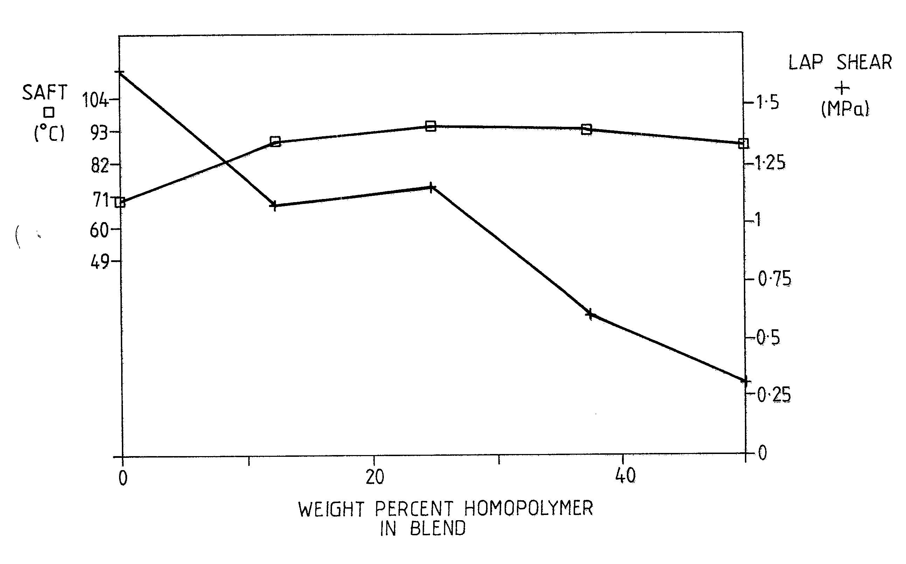

The accompanying drawing illustrates the results summarised in Table 1. The abscissa indicates the weight percent of the butene-1 homopolymer (H-1-B) in the blend. The left hand ordinate indicates SAFT (in °C) and the right hand ordinate indicates lap shear (in MPa).

## TABLE 1

| H-1-B Homopolymer Parts by weight | 1B-CoE 6 Butene-1 ethylene Copolymer with 6% Ethylene Comonomer Parts by weight | Weight ratio Homopolymer:Copolymer | Tackifying Resin (ARKON P-85) Parts by weight | Properties SAFT °C (°F) | LAP SHEAR MPa (psi) |
|---|---|---|---|---|---|
| 0 (control) | 50 | 0:100 | 50 | 69 (157) | 1.63 (237) |
| 50 (control) | 0 | 100:0 | 50 | 88 (191) | 0.31 (45) |
| 12.5 | 37.5 | 25:75 | 50 | 89 (193) | 1.06 (154) |
| 25 | 25 | 50:50 | 50 | 94 (202) | 1.14 (165) |
| 37.5 | 12.5 | 75:25 | 50 | 93 (200) | 0.60 (87) |

## TABLE 2

| H-1-B Homopolymer Parts by weight | 1B-CoE 6 Butene-1 ethylene Copolymer with 6% Ethylene Comonomer Parts by weight | Weight ratio Homopolymer:Copolymer | Tackifying Resin (ESCOREZ 5380) Parts by weight | Properties | | |
|---|---|---|---|---|---|---|
| | | | | SAFT °C (°F) | T-Peel Al Kg/2.54cm (pli) | T-Peel PP Kg/2.54cm (pli) |
| 0 (control) | 50 | 0:100 | 50 | 68 (154) | 1.21 (2.67) | 0.85 (1.87) |
| 10 | 40 | 20:80 | 50 | 76 (168) | 0.69 (1.52) | 0.67 (1.47) |
| 20 | 30 | 40:60 | 50 | 84 (183) | 0.55 (1.22) | 1.00 (2.2) |
| 30 | 20 | 60:40 | 50 | 88 (190) | 0.45 (1) | 1.42 (3.13) |
| 40 | 10 | 80:20 | 50 | 89 (192) | 0.17 (0.37) | 0.75 (1.66) |
| 50 (control) | 0 | 100:0 | 50 | 92 (197) | 0.30 (0.67) | 0.39 (0.85) |

EP 0 314 495 A2

Adhesives as described above and identified in Tables 1 and 2, are prepared using either a small Brabender compound head (approximately half litre capacity) or a sigma blade mixer (approximately one litre capacity). The test formulations are easily blended using preheated equipment (170°-180°C) by introducing the butene-1 polymer(s), mixing until a soft, homogeneous mass is formed, and then gradually introducing the remaining ingredients, preferably with the tackifying resin first, followed by the remaining ingredients. Mixing times should be 20 minutes.

Thin adhesive films (125 to 200 μm thick) can be prepared from the adhesive formulation by casting the adhesive blend onto release coated polyester film (i.e. onto the release coated side) using a pair of heated nip rolls that are adjusted to produce the desired gap, with resulting adhesive thickness. Preheated adhesive (preheated at about 130°C) can be poured onto a polyester film and hand drawn through the heated nip rolls. Using this technique it is possible to produce adhesive films, with dimensions a meter in length by 15 centimeters in width, with a small quantity (<60 gms) of adhesive, so that very small quantities of adhesive can be evaluated.

Once cooled and allowed to set, adhesives made by the above process were used to prepare test specimens. Polypropylene, polybutylene, aluminum and polyethylene can be used as substrates for the test specimens. Test specimens are prepared by placing a square of film of adhesive between the substrate, and then joining the film and substrate under moderate contact pressure with a heat sealer, such as a Sentinel heat sealer, to form lap shear or SAFT bonded substrate specimens.

1. SAFT: Shear Adhesion Failure Temperature - The upper service temperature limit of the adhesive was estimated by the SAFT test. A 25 X 25 mm lap shear specimen was formed with the substrate of interest and the adhesive as the interlayer between the substrate surfaces. The specimen was suspended in a temperature programmed oven, and the free end of the specimen was leaded at 500 or 1000 gm. The temperature was programmed to rise at a rate of 22°C/hour. The SAFT was taken at the temperature at which the bond failed and the weightload fell.

2. Lap Shear Strength - A 25 X 25 mm specimen was formed with the substrate of interest and the adhesive as the interlayer between the substrate surfaces. Specimens were drawn apart at a rate of 1.27 mm/min. in an Instron tester, until the maximum force required to break the bond was obtained. 3 mm (125 mils) anodized aluminum was used as a substrate in these tests.

3. T-Peel - A 25 mm X 150 mm laminate test specimen was formed with the substrate of interest and the adhesive as the interlayer between the substrate surfaces. The laminate surfaces were placed in an Instron tester, one surface in the lower jaw. The jaws were separated at a rate of 25 cm/min. The time required to peel the surfaces was recorded continuously. The maximum and minimum values were noted, as well as failure mode, i.e. adhesive, cohesive, or a combination. The test approximated a peel angle of about 180°C. T-peel tests were carried out on both aluminum and polypropylene substrates.

It was found that the simultaneous high SAFT and low T-peel were functions of the proportions of butene-1 homopolymer to butene-1/ethylene copolymer in the blend.

## Claims

1. A hot melt adhesive comprising a blend of:
(i) from 10 to 90% by weight of an intimate mixture of (a) an at least partially crystalline copolymer of butene-1 and ethylene, wherein the ethylene content is from 1 to 20 mole percent, and (b) a butene-1 homopolymer, the weight ratio of (a):(b) in said intimate mixture being from 9:1 to 1:9;
(ii) from 90 to 10% by weight of a tackifying resin, the weight percentages of (i) and (ii) being based on their combined weight; and
(iii) up to 0.5 parts by weight per 100 parts by weight of (i) and (ii) (phr) of an antioxidant.

2. An adhesive according to claim 1, wherein said blend comprises from 45 to 55% by weight of (i), from 45% to 55% by weight of (ii), and from 0.1 to 0.5 phr of (iii).

3. An adhesive according to claim 1 or 2, wherein said tackifying resin (ii) is an aliphatic, substantially non-polar resin selected from $C_5$-$C_9$ stream resins, polyterpenes and hydrogenated resins with softening points of 70°C to 130°C.

4. An adhesive according to claim 1, 2, or 3, which also comprises up to 30 phr of a microcrystalline wax.

5. An adhesive according to any one of the preceding claims, which also comprises up to 30 phr of atactic polypropylene.

6. An adhesive according to any one of the preceding claims, which also comprises a nucleating agent.

7. An adhesive according to claim 6, wherein said nucleating agent is a substituted stearamide, stearamide, high density polyethylene, polypropylene or para-amino-benzoic-acid.

8. An adhesive according to any one of the preceding claims, wherein said antioxidizing agent (iii) is tetrakis methylene (3,5-di-tert-butyl-4-hydroxy-hydrocinnamate)methane.

9. A laminar structure comprising a substrate and a hot melt adhesive as claimed in any one of claims 1 to 8.

10. A laminar structure according to claim 9, wherein the substrate is of isotactic polypropylene, isotactic polybutylene, steel, paper, aluminum, anodized aluminum or a crystalline polymer.